# EUROPEAN PATENT APPLICATION

(11) **EP 1 232 781 A1**
(43) Date of publication of application: **21.08.2002**
(21) Application number: 02075476.8
(22) Date of filing: 05.02.2002
(51) Int. Cl.: B01D 46/52, B01D 46/42, B01D 29/21, B01D 29/23, B01D 29/07

(54) **Low restriction air filter with structural pleats**

(30) Priority: 15.02.2001 US 269085 P
(71) Applicant: Siemens Automotive Inc., Chatham, Ontario, N7M 5M7 (CA)
(72) Inventor: Powell, Jeff, Belle River, Ontario N0R 1A0 (CA)
(74) Representative: Neill, Andrew Peter

(57) **Abstract**

An air induction system comprises a flow body and a filter housing. A pleated filter support (10) is connected to the housing (Figure 1). A filter (14) is supported by the pleated filter support (10), thereby supporting pleats on the filter (Figure 1). The pleated filter support may comprise support members (22) that define a pleated shape (Figure 1).

## Description

### BACKGROUND OF THE INVENTION

This invention relates to an air intake system comprising an air filter with structural pleats.

An air intake system typically comprises a flow body, filter housing, and filter. Such systems are used to provide clean air to a vehicle engine. Of course, any element in the air flow creates some restriction of air through the air intake system, limiting available engine power. Accordingly, any air intake system somewhat prevents the engine from operating at optimal levels.

Generally, air filters have an inner and outer screen with a filter captured between the two screens. The filter is typically pleated so as to increase the surface area of the filter. The screens provide structure for the air filter, allowing the filter to be slightly compressed within the filter housing. However, this design of an air filter requires the filter media to have sufficient thickness to be pleated. Low restriction media, which would permit greater air flow, is too thin to support itself into pleats. Additionally, the current design employs two screens for filter retention. Both filter media and the screens may thereby limit airflow to the engine.

A need therefore exists for an air induction system that offers the benefits of low air restriction while still providing sufficient surface area for the filter to clean the air entering the vehicle engine.

### SUMMARY OF THE INVENTION

One embodiment of this invention comprises an air induction system having a flow body and a filter housing. Rather than employ a pleated filter, the invention uses a filter with a pleated filter support, which supports the filter within the filter housing. The pleated filter support includes generally rigid support members arranged into pleats. In this way, a low restriction filter may be employed that relies on the pleated filter support for its pleated structure rather than its own thickness and firmness. The filter media is of course less rigid than the support.

The support members are provided by a plurality of posts formed into a pleated form similar to a standard filter. The pleated filter may also comprise a plurality of spaced ridges. A wire mesh may be used to provide the support member of the pleated filter support. To accommodate a standard filter housing, the pleated filter support may be circular.

The filter may comprise a low restriction filter paper. This paper may be adhered to the pleated filter support by an adhesive or by vibration welding. Further, a filter seal may serve to direct air flowing through the air induction system through the filter.

Accordingly, a plurality of posts are formed into pleats. The pleats are connected to a support, and a filter is adhered to the pleats. The system results in less air restriction than existing air intake designs.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1 illustrates an embodiment of the invention including pleaded filter support and filter.
Figure 2 illustrates another view of the embodiment of Figure 1.
Figure 3 illustrates an above view of the filter and pleated filter support, highlighting the filter seal.
Figure 4 illustrates another view of the invention including filter and filter support.
Figure 5 illustrates another view of the embodiment of Figure 4, illustrating the thickness of the filter and the pleated filter support.
Figure 6A illustrates a wire mesh.
Figure 6B shows the mesh arranged into an embodiment of this invention.
Figure 7 illustrates the invention including low body, filter housing, pleated filter support, and filter within its environment.

### DESCRIPTION OF THE PREFERRED EMBODIMENTS

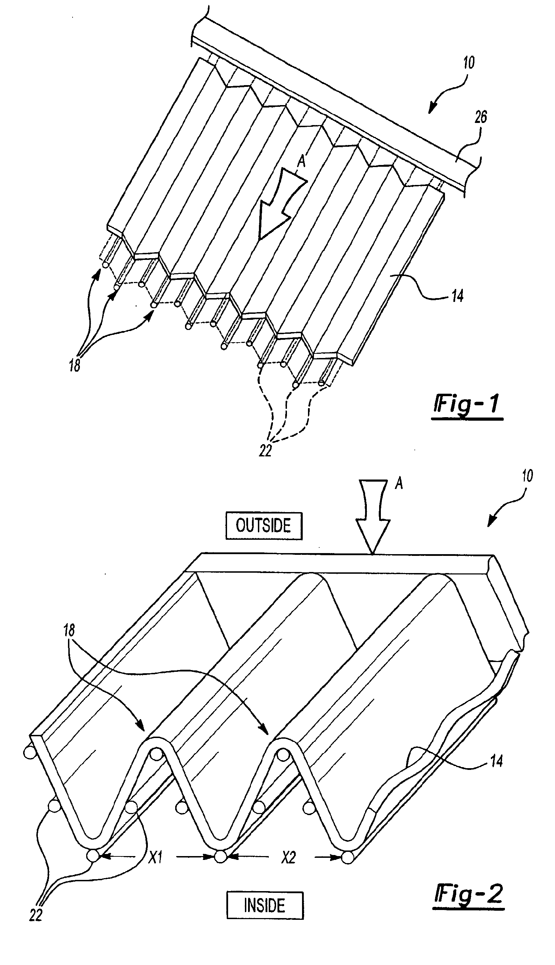

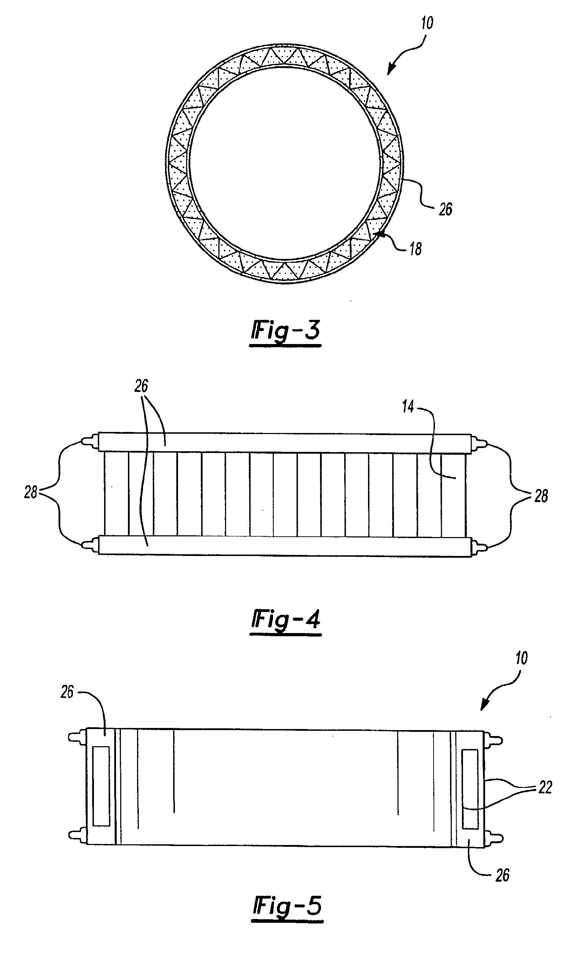

Figure 1 illustrates an embodiment of the invention including pleated filter support 10 and filter 14. As shown by dashed lines, a plurality of posts 22 are formed into pleats 18, which are illustrated by dashed lines. Because posts 22 form pleats 18, filter 14 may comprise a low restriction filter media, which may otherwise fail to have sufficient thickness to support pleats within an air intake system. Moreover, the invention does not require an additional screen. The posts 22 extend from one filter seal 26 to another spaced seal 26 (see Figure 5).

As shown in Figure 2, filter 14 rests on plurality of posts 22. Posts 22, such as steel posts, are formed into pleats 18 to thereby support filter 14 in pleat form. As shown in both Figure 1 and Figure 2, filter 14 rests on posts 22 and lies between the direction of air flow along arrow A and plurality of posts 22. Filter 14 is thus on the dirty air side of posts 22. This position helps ensure that filter 14 will not come loose from plurality of posts 22 as a consequence of airflow. Additionally, it is preferable to use low restriction media amenable to adhering to plurality of posts 22. The filter media 14 may be thus adhered by glue, vibration welding, or other means commonly available to posts 22. In the event vibration welding is employed, a polyester low restriction paper composed of polyester fibers, such as Reemay ®, may be employed. Reemay ® is a commercially available product that is composed of spun bound polyester that has continuous filament fibers that are randomly arranged, highly dispersed, and bonded at filament junctions.

Figure 3 illustrates an above view of pleated filter support 10. Shown also is filter seal 26, which may be on top as shown and on bottom as shown in Figure 4. As can be seen, the invention may embody an annular or circular form. Filter 14 may have its ends taped, glued, welded or otherwise connected to form annular form. Pleats 18 may be equally spaced around the annular form.

Figure 4 illustrates the side view of the invention showing filter 14 in relation to seal 26. Elastomeric material may be used as seal 26 and encapsulate the ends of the annular form as shown. Sealing beads 28 may be formed as known to assist sealing. The material for seal 26 should withstand under hood temperatures, exposure to engine oil and gasoline.

Figure 5 illustrates pleated filter support 10 and plurality of posts 22. This picture illustrates the distance between posts and consequently of width of pleat. It is desirable to make pleats of the same width as shown in Figure 2. There, X1 and X2 are about the same distance. The posts are preferably quite thin, as shown in Figure 2, however, they are shown thicker in Figure 5 to provide a better understanding of the structure.

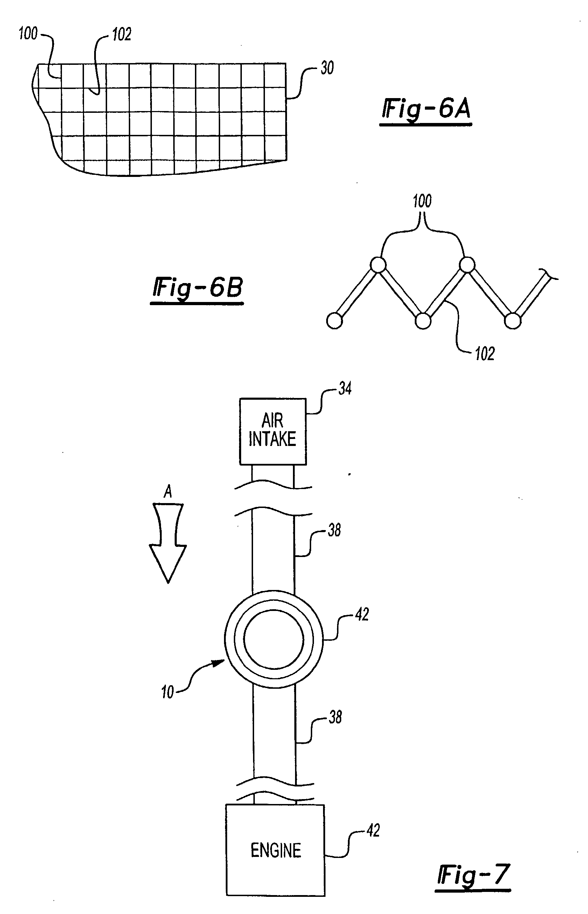

Figure 6A illustrates an alternative embodiment of the invention. Rather than employ a plurality of posts 22 as shown in Figure 1, one may employ wire mesh 30 to support filter 14. The mesh has wires 100 extending in one direction and other wires 102 extending perpendicular to the wires 100. Wire mesh 30 is simply formed into pleats as shown in Figure 6B. Wire mesh 30 may comprise ½ inch by ½ inch squares constructed of 0.020 inch wire. No wire mesh need be on the dirty air side of pleated filter support. This design offers more structure, but also more restriction to air flow than the design of Figure 1.

As seen in Figure 7, pleated filter support is located within the path of air flow, along arrow A. Air enters into air intake 34, travels through flow body 38 into filter housing 42, and ultimately to engine 42. Such air passes through pleated filter support 10, which has filter 14 providing clean air to engine 42. Accordingly, the invention offers low restriction and sufficient filtration at minimal expense. This invention is particularly useful in the racing industry which requires optimal engine performance.

The aforementioned description is exemplary rather than limiting. Many modifications and variations of the present invention are possible in light of the above teachings. The preferred embodiments of this invention have been disclosed. However, one of ordinary skill in the art would recognize that certain modifications would come within the scope of this invention. Hence, within the scope of the appended claims, the invention may be practiced otherwise than as specifically described. For this reason the following claims should be studied to determine the true scope and content of this invention.

## Claims

1. An air filter comprising:
a filter housing with air flowing through said filter housing in a first direction;
a pleated filter support operatively connected to said filter housing said pleated filter support having support members define a pleated shape; and
a filter at least partially supported by said support members.

2. The air filter of Claim 1 wherein said pleated filter support comprises a wire mesh.

3. The air filter of Claim 1 wherein said pleated filter support comprises a plurality of posts.

4. The air filter of Claim 1 wherein said pleated filter support comprises a plurality of ridges spaced about equally apart.

5. The air filter of Claim 1 wherein said pleated filter support comprises at least a partially annular form.

6. The air filter of Claim 1 wherein said filter comprises a low restriction filter paper.

7. The air filter of Claim 1 wherein said filter and said pleated filter support are operatively connected by welding.

8. The air filter of Claim 1 wherein said filter and said pleated filter support are operatively connected by an adhesive.

9. The air filter of Claim 1 including a filter seal operatively connected to said filter and said pleated filter support.

10. An air induction system comprising:
a flow body;
a filter housing in communication with said flow body with air flowing through said filter housing in a first direction;
a pleated filter support operatively connected to said filter housing said filter support having support members define a pleated shape; and
a filter at least partially supported by said support members.

11. The air induction system of Claim 10 wherein said pleated filter support comprises a wire mesh.

12. The air induction system of Claim 10 wherein said pleated filter support comprises at least a partially annular form.

13. The air induction system of Claim 10 wherein said filter comprises a low restriction filter paper.

14. The air induction system of Claim 10 wherein said filter and said pleated filter support are operatively connected by welding.

15. The air induction system of Claim 10 wherein said filter and said pleated filter support are operatively connected by an adhesive.

16. The air induction system of Claim 10 including a filter seal operatively connected to said filter and said pleated filter support.

17. A method of manufacturing an air filter comprising the steps of:
arranging a plurality of support members into pleats; and
adhering a filter to the pleats.

18. The method of manufacturing the filter of Claim 18 wherein the plurality of support members comprise a wire mesh.

19. The method of manufacturing the filter of Claim 18 including the step of sealing the filter to the support.
